# EUROPÄISCHE PATENTSCHRIFT

(11) **EP 4 122 320 B1**
(45) Veröffentlichungstag und Bekanntmachung des Hinweises auf die Patenterteilung: **23.04.2025**
(21) Anmeldenummer: 22177801.2
(22) Anmeldetag: 08.06.2022
(51) Int. Cl.: A01M 29/06, A01M 29/10

(54) **KLEINSÄUGERABWEHRVORRICHTUNG UND VERFAHREN ZUR FERNÜBERWACHUNG VON KLEINSÄUGERABWEHRVORRICHTUNGEN**
DEVICE FOR PROTECTING AGAINST SMALL MAMMALS AND METHOD FOR REMOTE MONITORING OF DEVICES FOR PROTECTING AGAINST SMALL MAMMALS
DISPOSITIF DE LUTTE CONTRE LES PETITS MAMMIFÈRES ET PROCÉDÉS DE SURVEILLANCE À DISTANCE DES DISPOSITIFS DE LUTTE CONTRE LES PETITS MAMMIFÈRES

(30) Priorität: 23.07.2021 DE 102021207907
(43) Veröffentlichungstag der Anmeldung: 25.01.2023
(73) Patentinhaber: K&K Handelsgesellschaft mbH, 68723 Oftersheim (DE)
(72) Erfinder: GOMEZ, Marcos Alonso, 68723 Oftersheim (DE); SCHUSTER, Nicole, 68723 Oftersheim (DE)
(74) Vertreter: Isarpatent

(56) Entgegenhaltungen:
- WO-A1-2017/149163
- DE-A1- 102011 122 565
- US-A- 4 862 145
- US-A1- 2005 151 653
- US-B2- 7 530 195

## Beschreibung

### TECHNISCHES GEBIET DER ERFINDUNG

Die Erfindung betrifft eine Kleinsäugerabwehrvorrichtung, insbesondere für die Verwendung in einem Motorraum eines Kraftfahrzeugs, mit einer RFID-Schnittstelle. Die Erfindung betrifft weiterhin ein System mit einer eine RFID-Schnittstelle aufweisenden Kleinsäugerabwehrvorrichtung und einem RFID-Lesegerät. Ferner betrifft die Erfindung ein Verfahren zur Fernüberwachung von in Kraftfahrzeugen eingebauten Kleinsäugerabwehrvorrichtungen über eine RFID-Schnittstelle.

### TECHNISCHER HINTERGRUND

Kleinsäuger, insbesondere Marder, können durch Verbiss von Kabeln und Schläuchen, insbesondere im Motorraum eines Fahrzeuges, erhebliche Beschädigungen verursachen. Dringt beispielsweise ein Marder in den Motorraum eines geparkten Fahrzeuges ein, kann er elektrische Kabel, beispielsweise das Zündkabel, und sonstige Gummischläuche beschädigen, so dass die Fahrtüchtigkeit und Sicherheit des Fahrzeuges beeinträchtigt werden kann.

Es sind Abwehrsysteme zur Abwehr von Kleinsäugern verbreitet, die über unterschiedliche Abwehrmechanismen zur Abwehr von Kleinsäugern verfügen. Die Abwehrmechanismen umfassen Aktoreinheiten, die auf einen in den Motorraum eindringenden Kleinsäuger derart einwirken, dass dieser den Motorraum wieder verlässt. Hierzu erzeugen herkömmliche Abwehrsysteme akustische und/oder optische Signale, welche einen eindringenden Kleinsäuger derart stören, dass er den Motorraum des Fahrzeuges verlässt. Bekannte Abwehrsysteme können beispielsweise Ultraschallgeneratoren verwenden, welche Ultraschallsignale zur Vertreibung des Kleinsäugers aus dem Motorraum ausstrahlen. Alternativ oder zusätzlich dazu können herkömmliche Abwehrsysteme zur Abwehr von Kleinsäugern mit Aktoreinheiten ausgestattet sein, die unter Hochspannung stehen und bei Berührung durch den Kleinsäuger einen Elektroschock an den Kleinsäuger abgeben, um diesen zu vertreiben. Wieder andere Abwehrsysteme nutzen Lichtblitze, um die nachtaktiven Marder zu blenden, zu irritieren und schließlich zu verscheuchen.

In beiden Fällen ist zur Erzeugung der Ultraschallsignale bzw. zur Erzeugung der elektrischen Hochspannung eine Stromquelle notwendig, die die jeweiligen Generatoren bzw. Aktoreinheiten mit elektrischer Energie versorgt. Dazu existieren prinzipiell zwei Möglichkeiten: Entweder können die Generatoren bzw. Aktoreinheiten über separate Stromleitungen mit einer externen Stromquelle wie beispielsweise einer Fahrzeugbatterie verbunden werden (zentrale Energieversorgung), oder die Generatoren bzw. Aktoreinheiten können jeweils über eigene den einzelnen Generatoren bzw. Aktoreinheiten zugeordnete und lokal vorgesehene Stromquellen wie etwa Batterien oder Akkus verfügen (dezentrale Energieversorgung).

Im Falle zentraler Energieversorgung sind in der Regel mehrere Aktoreinheiten mit einer zentralen Stromquelle über ein oder mehrere Kabel verbunden. Für den Betrieb eines Kleinsäugerabwehrgerätes im Motorraum von Fahrzeugen ist insbesondere in modernen Fahrzeugen mit knapp bemessenem Bauraum und verkapselten Motorbauteilen ein kabelgebundener Einbau mit erheblichen Schwierigkeiten verbunden. Zudem limitieren die durch die Verkabelung bedingten Randbedingungen (wie etwa vorgegebene Kabellänge, notwendige Verlegung abseits von rotierenden oder heißen Motorelementen, Vermeidung von elektrischen Störfeldern für die Fahrzeugelektronik und dergleichen) die möglichen Anbringungsstellen für die Aktoreinheiten. Häufig können die für eine erfolgreiche Kleinsäugerabwehr strategisch wichtigen Punkte im Motorraum (beispielweise die Laufwege und/oder Eintrittsstellen der Kleinsäuger) aufgrund dieser limitierenden Randbedingungen nicht oder nur mit erhöhtem Montageaufwand mit Aktoreinheiten bestückt werden.

Vorteilhaft können in diesem Fall der Verzicht auf eine Verkabelung und der damit verbundene Übergang zur dezentralen Energieversorgung der Aktoreinheiten sein. Insbesondere ist dadurch keine Anpassung an Änderungen in Bordelektroniksystemen des Fahrzeugherstellers mehr notwendig. Zu diesem Zweck kann jede der Aktoreinheiten mit einer separaten Stromquelle wie etwa einer Batterie oder einem Akkumulator versehen werden und autark operieren.

Autark operierende Kleinsäugerabwehrgeräte müssen jedoch manuell auf Funktionsfähigkeit und Aktivitätszustand überprüft werden. Dies kann sich bei einem Einsatz von Kleinsäugerabwehrgeräte im Motorraum eines Fahrzeugs aufgrund der strategischen Positionierung im Motorraum jedoch kompliziert gestalten. Beispielsweise ist der untere Bereich des Motorraums schlecht bis gar nicht einsehbar und ohne vorherige Demontagearbeiten, z.B. ohne Abnahme der Bodenplatte zu Wartungs- und Instandhaltungszwecken nicht erreichbar.

Hierzu schlägt beispielsweise das Dokument DE 10 2012 008 712 A1 ein Schädlingsvertreibungsgerät vor, welches eine Einrichtung zur Überwachung und Information über Aktivitäten des Gerätes aufweist. Die Überwachungsvorrichtung stellt fest, wenn eine Auslösung des Gerätes durch Schädlinge erfolgt ist, so dass der Nutzer nachverfolgen kann, ob das Gerät tatsächlich funktioniert. Bei einem Einsatz des Schädlingsvertreibungsgerätes zum Vertreiben von Mardern in einem Motorraum eines Kraftfahrzeuges kann der Besitzer erkennen, dass ein Alarm ausgelöst worden ist, so dass er vor Fahrtantritt die Möglichkeit hat, mögliche Schäden am Kraftfahrzeug durch Marderbisse überprüfen zu können. Die durch die Überwachung der Auslösevorrichtung erlangten Informationen werden an geeignete Kommunikationsmittel übertragen, wie etwa das Internet, einen Computer, ein Mobiltelefon, ein Smartphone oder dergleichen. Das Dokument DE 10 2010 022 857 A1 offenbart eine Telematikeinheit mit Batterien und einem RFID-Modul zur Überwachung der Telematikeinheit. Das Dokument DE 10 2015 115 102 A1 offenbart ein Sensorsystem mit RFID-Kommunikationsmodul für die Überwachung von inneren Parametern einer Fahrzeugbatterie.

Überwachungseinrichtungen, wie etwa die des Dokuments DE 10 2012 008 712 A1, verbrauchen jedoch relativ viel Energie, was zu Lasten des Energiemanagements autark operierender Kleinsäugerabwehrgeräte geht und damit deren Laufzeit zwischen notwendigen Wartungsvorgängen drastisch verringern kann.

Das Dokument DE 10 2011 122 565 A1 beschreibt eine Kleinsäugerabwehrvorrichtung mit einer Aktoreinheit und einer Überwachungseinrichtung, welche mit elektrischen Komponenten der Kleinsäugerabwehrvorrichtung gekoppelt ist, und welche dazu ausgelegt ist, den Betriebszustand der Kleinsäugerabwehrvorrichtung zu überwachen.

### ZUSAMMENFASSUNG DER ERFINDUNG

Eine der Aufgaben der Erfindung liegt demnach darin begründet, Lösungen für die Optimierung der Fernüberwachung von Kleinsäugerabwehrgeräten zu finden, welche möglichst energiesparsam sind.

Diese und andere Aufgaben werden durch eine Kleinsäugerabwehrvorrichtung mit den Merkmalen des Anspruchs 1, durch ein System mit den Merkmalen des Anspruchs 14 sowie durch ein Verfahren zur Fernüberwachung einer Kleinsäugerabwehrvorrichtung mit den Merkmalen des Anspruchs 17 gelöst.

Gemäß einem ersten Aspekt der Erfindung umfasst eine Kleinsäugerabwehrvorrichtung eine Aktoreinheit, welche dazu ausgelegt ist, einen Abwehreffekt zur Vertreibung eines Kleinsäugers zu erzeugen, , eine Überwachungseinrichtung, welche mit elektrischen Komponenten der Kleinsäugerabwehrvorrichtung gekoppelt ist, und welche dazu ausgelegt ist, den Betriebszustand der Kleinsäugerabwehrvorrichtung zu überwachen, und einen passiven oder semi-passiven RFID-Transponder, welcher mit der Überwachungseinrichtung gekoppelt ist, und welcher dazu ausgelegt ist, ein den Betriebszustand der Kleinsäugerabwehrvorrichtung repräsentierendes Betriebszustandssignal über eine RFID-Luftschnittstelle an ein RFID-Lesegerät auszusenden. In manchen Ausführungsformen kann die Kleinsäugerabwehrvorrichtung in einem Motorraum eines Kraftfahrzeugs angeordnet sein.

Gemäß einem zweiten Aspekt der Erfindung umfasst ein System zur Fernüberwachung von Kleinsäugerabwehrvorrichtungen mindestens eine Kleinsäugerabwehrvorrichtung gemäß dem ersten Aspekt der Erfindung sowie ein Lesegerät, welches ein RFID-Abfragegerät aufweist. In manchen Ausführungsformen umfasst das Lesegerät ein tragbares Gerät mit drahtloser Netzwerkkonnektivität, wie beispielsweise ein Smartphone, ein Tablet, ein Laptop, ein Notebook oder eine Smartwatch. Beispielsweise kann es eine anwendungsspezifische Softwareapplikation ("App") für ein konventionelles Smartphone einem Nutzer ermöglichen, eine Kleinsäugerabwehrvorrichtung über sein persönliches mobiles Endgerät hinsichtlich eines möglicherweise erforderlichen Batteriewechsels zu überwachen.

Gemäß einem dritten Aspekt der Erfindung umfasst ein Verfahren zur Fernüberwachung einer Kleinsäugerabwehrvorrichtung die Schritte des Erfassens elektrischer Betriebsparameter, insbesondere eines Ladungszustands eines elektrischen Energiespeichers, einer Kleinsäugerabwehrvorrichtung mittels einer Überwachungseinrichtung der Kleinsäugerabwehrvorrichtung; des Zwischenspeicherns der durch die Überwachungseinrichtung erfassten elektrischen Betriebsparameter in einem Speicher eines in der Kleinsäugerabwehrvorrichtung integrierten passiven oder semi-passiven RFID-Transponders; des Energetisierens des passiven oder semi-passiven RFID-Transponders durch ein externes RFID-Lesegerät über eine RFID-Luftschnittstelle; und des Auslesens, durch ein RFID-Abfragegerät des RFID-Lesegerätes, der erfassten elektrischen Betriebsparameter aus dem Speicher des passiven oder semi-passiven RFID-Transponders über die RFID-Luftschnittstelle in das RFID-Lesegerät.

Einer der Vorteile der erfindungsgemäßen Kleinsäugerabwehrvorrichtung besteht darin, dass die Lage der Kleinsäugerabwehrvorrichtung unabhängig von Versorgungseinrichtungen oder einer Empfangseinheit, die die von der Kleinsäugerabwehrvorrichtung ausgesendeten Statussignale empfängt und auswertet, frei gewählt werden kann.

Besonders bei einem Einsatz des erfindungsgemäßen Systems in einem Kraftfahrzeug ergibt sich durch die räumliche Unabhängigkeit von Kleinsäugerabwehrvorrichtung und zugeordneter Empfangsvorrichtung ein erheblicher Vorteil in der Montage, Wartung, Instandhaltung und Überwachung der Kleinsäugerabwehrvorrichtung(en) im Motorraum des Kraftfahrzeugs.

Durch die Übertragung von Statusinformationen der Kleinsäugerabwehrvorrichtung(en) nach Bedarf an ein RFID-Lesegerät, die nach Gesichtspunkten des Bedienkomforts und der Erreichbarkeit bzw. Einsehbarkeit durch einen Nutzer gestaltet werden kann, lassen sich Kleinsäugerabwehrvorrichtungen ständig hinsichtlich ihrer Funktionstüchtigkeit und Betriebsbereitschaft überwachen. Dabei ist es ein spezieller Vorteil, dass insbesondere die Überwachung des Ladungszustands des in die Kleinsäugerabwehrvorrichtung(en) integrierten Energiespeichers eine bedarfsgerechte und zielorientierte Wartung und Instandhaltung der Kleinsäugerabwehrvorrichtung(en) ermöglicht, ohne dass zur Kontrolle der Kleinsäugerabwehrvorrichtung(en) aufwändige Demontage- oder Umbauarbeiten notwendig wären.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen der Kleinsäugerabwehrvorrichtung kann die Kleinsäugerabwehrvorrichtung weiterhin einen elektrischen Energiespeicher aufweisen, welcher mit der Aktoreinheit gekoppelt ist, und welcher dazu ausgelegt ist, die Aktoreinheit zu deren Betrieb mit elektrischer Energie zu versorgen.

Gemäß einiger Ausführungsformen der Kleinsäugerabwehrvorrichtung kann die Überwachungseinrichtung mit dem elektrischen Energiespeicher gekoppelt und dazu ausgelegt sein, den Ladungszustand des elektrischen Energiespeichers zu überwachen. Dabei kann gemäß einiger Ausführungsformen der passive oder semi-passive RFID-Transponder dazu ausgelegt sein, ein den durch die Überwachungseinrichtung überwachten Ladungszustand des elektrischen Energiespeichers repräsentierendes Energiespeicherzustandssignal über die RFID-Luftschnittstelle an das RFID-Lesegerät auszusenden. Da bei autark operierenden Kleinsäugerabwehrvorrichtungen mit Akkumulatoren oder Batterien zwangsläufig im Laufe des Betriebs eine Wiederaufladung bzw. ein Batteriewechsel erforderlich ist, kann durch die kontinuierliche Überwachung des Ladungszustands des elektrischen Energiespeichers rechtzeitig und ohne hohen Wartungsaufwand die Notwendigkeit einer Wiederaufladung bzw. eines Batteriewechsels von außen über einen RFID-Auslesevorgang erkannt werden.

Gemäß einiger Ausführungsformen der Kleinsäugerabwehrvorrichtung kann die Aktoreinheit mindestens eine Elektrode, und einen Hochspannungsgenerator aufweisen, welcher dazu ausgelegt ist, die mindestens eine Elektrode mit einem Hochspannungspotential zu beaufschlagen. Dabei kann die Aktoreinheit in einigen Ausführungsformen beispielsweise mindestens zwei Elektroden aufweisen. In einigen Ausführungsformen kann der Hochspannungsgenerator dabei dazu ausgelegt sein, eine Hochspannung zwischen den mindestens zwei Elektroden anzulegen. Elektroschocks sind eine wirksame Methode, gegen das Eindringen von Kleinsäugern in einen Motorraum eines Fahrzeugs vorzugehen. Bei Berührung der im Motorraum angebrachten und durch den Hochspannungsgenerator aufgeladenen Elektroden und gegebenenfalls eines geerdeten anderen Bauteils schließt sich für kurze Zeit ein Stromkreis und der Kleinsäuger erhält einen üblicherweise nicht letalen Stromschlag (Weidezaunprinzip).

Gemäß einiger weiterer Ausführungsformen der Kleinsäugerabwehrvorrichtung kann die Aktoreinheit einen Ultraschallgenerator aufweisen, welcher dazu ausgelegt ist, Schallsignale bei Frequenzen, die oberhalb des Hörbereiches des menschlichen Gehörs liegen, zu erzeugen. Es ist bekannt, dass Kleinsäuger auch Frequenzen im Ultraschallbereich von mehr als etwa 12 kHz wahrnehmen können. Ultraschallgeneratoren verjagen Kleinsäuger wie etwa Marder durch die Abgabe von schrillen Tonimpulsen hoher Frequenzen.

Gemäß einiger weiterer Ausführungsformen der Kleinsäugerabwehrvorrichtung kann die Aktoreinheit mindestens einen Lichtsignalgeber aufweisen, welcher dazu ausgelegt ist, in periodischen oder unregelmäßigen Abständen Lichtblitze abzustrahlen. Kleinsäuger werden beispielsweise durch grelle, intensive Lichtblitze und deren Reflexionen an metallischen Teilen im Motorraum irritiert. Gerade Marder als nachtaktive, lichtscheue Tiere fühlen sich unter dem Eindruck von Lichtblitzen nicht wohl und verlassen den Motorraum.

Jede der vorgenannten Typen von Aktoreinheiten wird mit elektrischem Strom betrieben, die die jeweiligen aktiven Komponenten der Aktoreinheiten aus dem elektrischen Energiespeicher beziehen können. Es kann selbstverständlich auch möglich sein, mehrere Aktoreinheiten unterschiedlichen Typs in eine Kleinsäugerabwehrvorrichtung zu integrieren, um beispielsweise die Wahrscheinlichkeit der Abwehr eines Kleinsäugers durch eine Kombination zu erhöhen. Zum Beispiel kann eine Kleinsäugerabwehrvorrichtung in manchen Ausführungsvarianten sowohl einen Hochspannungsgenerator als auch einen Ultraschallgenerator aufweisen. Gleichermaßen kann eine Kleinsäugerabwehrvorrichtung in manchen Ausführungsvarianten sowohl einen Hochspannungsgenerator als auch einen Lichtsignalgeber aufweisen. Es kann in manchen Ausführungsvarianten auch möglich sein, eine Kleinsäugerabwehrvorrichtung sowohl mit einem einen Ultraschallgenerator als auch mit einem Lichtsignalgeber auszustatten. In manchen Ausführungsvarianten kann eine Kleinsäugerabwehrvorrichtung sowohl einen Hochspannungsgenerator, als auch einen Ultraschallgenerator als auch einen Lichtsignalgeber aufweisen. Es sollte dabei klar sein, dass etliche andere Typen von Aktoreinheiten, die zur Vertreibung von Kleinsäugern geeignet sind, ebenfalls eingesetzt werden können.

Gemäß einiger Ausführungsformen der Kleinsäugerabwehrvorrichtung kann der elektrische Energiespeicher eine Batterie oder einen Akkumulator aufweisen. Insbesondere kann der elektrische Energiespeicher wiederaufladbar sein.

Gemäß einiger Ausführungsformen der Kleinsäugerabwehrvorrichtung kann ein Gehäuse vorgesehen werden, in dem zumindest der elektrische Energiespeicher, die Überwachungseinrichtung und der RFID-Transponder eingebaut sind. Dadurch kann eine vorteilhafte Schirmung der Kleinsäugerabwehrvorrichtung gegenüber widrigen Einflüssen im Motorraum wie etwa Spritzwasser, Schmutzablagerungen geschützt werden. Zudem ist damit ein stabiler mechanischer Einbau in den Motorraum eines Kraftfahrzeugs gewährleistet.

Gemäß einiger Ausführungsformen der Kleinsäugerabwehrvorrichtung kann der passive oder semi-passive RFID-Transponder einen Speicherchip, einen integrierten Schaltkreis und eine RFID-Antenne aufweisen. Der Speicherchip kann dabei in manchen Ausführungsformen dazu ausgelegt sein, das jeweils aktuellste Energiespeicherzustandssignal zwischenzuspeichern. Dadurch kann der Speicherbedarf in dem RFID-Transponder gering gehalten und die notwendige Datenmenge beim Auslesen des RFID-Transponders schnell und effizient übermittelt werden. Besonders bei passiven oder semi-passiven RFID-Transponder ist dies vorteilhaft, damit die über das RFID-Abfragegerät zu übertragende Strahlungsleistung für die temporäre Energetisierung des RFID-Transponders nicht zu hoch sein muss.

Gemäß einiger Ausführungsformen der Kleinsäugerabwehrvorrichtung kann die Überwachungseinrichtung in einen Mikroprozessor der Kleinsäugerabwehrvorrichtung integriert und dazu ausgelegt sein, in periodischen Abständen den Ladungszustand des elektrischen Energiespeichers zu erfassen und das in dem Speicherchip des passiven oder semi-passiven RFID-Transponders gespeicherte Energiespeicherzustandssignal zu aktualisieren. Dabei kann die Überwachungseinrichtung vorteilhafterweise auf elektrische Parameter zurückgreifen, die für den Betrieb der Aktoreinheiten der Kleinsäugerabwehrvorrichtung ohnehin notwendig und dadurch im Prozessor vorhanden sind.

Gemäß einiger Ausführungsformen der Kleinsäugerabwehrvorrichtung kann die Überwachungseinrichtung in den passiven oder semi-passiven RFID-Transponder integriert und dazu ausgelegt sein, den Ladungszustand des elektrischen Energiespeichers zu erfassen, sobald der integrierte Schaltkreis des passiven oder semi-passiven RFID-Transponders durch das magnetische oder elektromagnetische Feld ein RFID-Lesegerätes energetisiert wird. Dies bietet den Vorteil, dass der Ladungszustand in Echtzeit ermittelt werden kann und nur dann eine Erfassung erfolgt, wenn auch tatsächlich eine Information über den Ladungszustand des elektrischen Energiespeichers angefordert wird, wodurch Energie des elektrischen Energiespeichers eingespart werden kann.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaltbild einer Kleinsäugerabwehrvorrichtung in Kommunikation mit einem RFID-Lesegerät gemäß einer Ausführungsform der Erfindung;
Fig. 2 ein weiteres schematisches Blockschaltbild einer Kleinsäugerabwehrvorrichtung in Kommunikation mit einem RFID-Lesegerät gemäß einer Ausführungsform der Erfindung;
Fig. 3 ein weiteres schematisches Blockschaltbild einer Kleinsäugerabwehrvorrichtung in Kommunikation mit einem RFID-Lesegerät gemäß einer Ausführungsform der Erfindung; und
Fig. 4 ein abstrahiertes Flussdiagramm eines beispielhaften Verfahrens zur Fernüberwachung einer Kleinsäugerabwehrvorrichtung gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

RFID-Transponder im Sinne der vorliegenden Erfindung umfassen senderseitige Systemkomponenten, welche bei der berührungslosen und automatischen Datenübermittlung von senderseitigen Daten mit Hilfe von hochfrequenten oder ultrahochfrequenten Radiowellen eingesetzt werden. Die RFID-Transponder sind mobile Sendeschnittstellen, welche von elektronischen Komponenten von Objekten, an denen sie angebracht sind, objektbezogene Informationen erhalten und selbige über drahtlose Funkwellenübertragung an empfängerseitige Systemkomponenten übermitteln können. Dabei werden der jeweilige RFID-Transponder als Sender und ein Lesegerät als Empfänger über von dem Lesegerät erzeugte magnetische Wechselfelder geringer Reichweite oder hochfrequente Radiowellen gekoppelt, um Daten vom RFID-Transponder zum Lesegerät übertragen zu können. Ein passiver RFID-Transponder kann über diese elektromagnetische Kopplung auch temporär mit Energie versorgt werden, insbesondere mit Energie, die zur Auslösung und Aufrechterhaltung der Funkwellenübertragung notwendig ist.

RFID-Transponder im Sinne der vorliegenden Erfindung sind elektronische Module, die im Wesentlichen einen elektronischen Speicherchip und eine mit dem Speicherchip gekoppelte und in das Modul integrierte Antenne aufweisen. RFID-Transponder können in verschiedenen Frequenzbändern elektromagnetische Signale aussenden und empfangen, beispielsweise im Bereich 125 kHz ("low frequency", LF) und 5,8 GHz ("super-high frequency", SHF). Je nach gewünschtem Frequenzband wird die Bauform der integrierten Antenne gewählt. Von spezieller Bedeutung sind Frequenzbänder um 13,56 MHz ("high frequency", HF) und zwischen 860 MHz bis 960 MHz ("ultra-high frequency", UHF).

UHF-Frequenzbänder können beispielsweise immer dann verwendet werden, wenn auf den Kommunikationskanälen eine höhere Zugriffs- und Auslesereichweite erreicht werden soll als auf HF-Kanälen. Frequenz, Antennenform und Antennengröße können entsprechend gewählt werden, um eine gewünschte Zugriffs- und Auslesereichweite, Robustheit gegenüber Störungen und Umwelteinflüssen sowie Robustheit gegenüber Störungen von RFID-Transpondern untereinander zu gewährleisten. Über ein elektromagnetisches Feld zwischen einem Lesegerät und der integrierten Antenne des RFID-Transponders kann eine Luftschnittstelle etabliert werden, über die drahtlos und unter Nutzung vorgegebener Datenaustauschprotokolle Daten zwischen dem Speicherchip des RFID-Transponders und einem Prozessor des Lesegerätes ausgetauscht werden können.

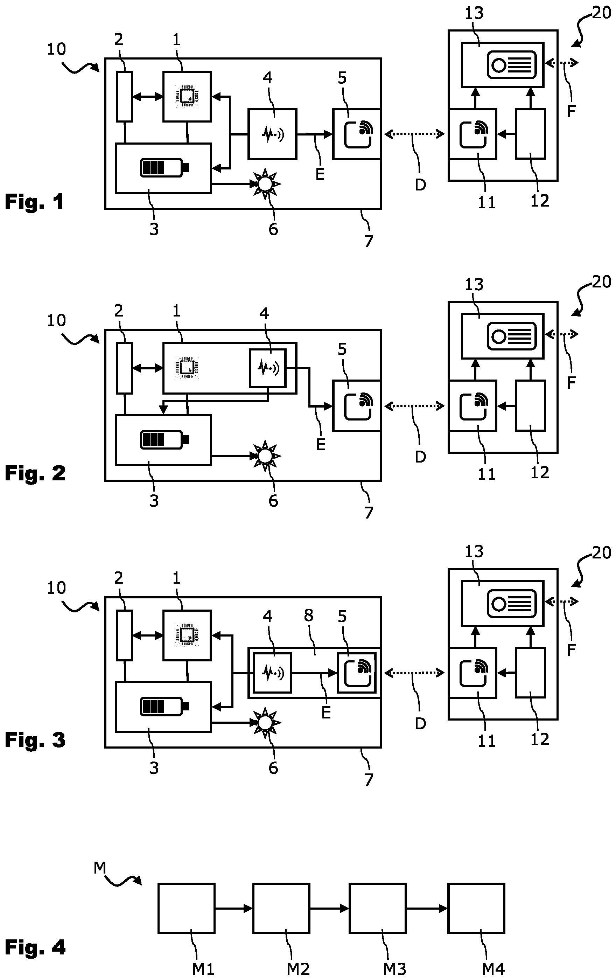

Fig. 1 zeigt ein schematisches Blockschaubild einer Kleinsäugerabwehrvorrichtung 10 in Kommunikation über eine RFID-Luftschnittstelle D mit einem RFID-Lesegerät 20. Die Kleinsäugerabwehrvorrichtung 10 kann beispielsweise zum Verjagen bzw. Verscheuchen von Säugern, die eine relativ geringe Körpergröße haben, wie beispielsweise Igel, Spitzmäuse, Nager, Fledermäuse und Hasentiere, eingesetzt werden. Kleinsäuger können dabei insbesondere Marder, marderartige Nager und Ratten umfassen. Die Kleinsäugerabwehrvorrichtung 10 kann beispielsweise im Motorraum eines Kraftfahrzeugs verbaut werden, um beispielsweise Marder oder Ratten von einem Eindringen in den Motorraum abzuhalten.

Die Kleinsäugerabwehrvorrichtung 10 umfasst im Allgemeinen eine Aktoreinheit 2, eine Überwachungseinrichtung 4 sowie einen RFID-Transponder 5. Einige oder alle der Komponenten können vollständig oder zumindest in Teilen in einem Gehäuse 7 integriert bzw. eingebaut sein. Es kann dabei vorgesehen sein, dass einige Teile oder Teilbereiche von bestimmten Komponenten aus dem Gehäuse 7 herausragen oder einen Wandabschnitt des Gehäuses 7 bilden. Beispielsweise können Teile der Aktoreinheit 2 wie etwa Elektroden, Lautsprecher oder Leuchtmittel aus dem Gehäuse 7 heraustreten oder in die Wand des Gehäuses 7 integriert sein.

Die Kleinsäugerabwehrvorrichtung 10 kann weiterhin einen elektrischen Energiespeicher 3 aufweisen. Der elektrische Energiespeicher 3 kann beispielsweise eine Batterie oder ein wiederaufladbarer Akkumulator sein, der mit der Aktoreinheit 2 und der Überwachungseinrichtung 4 elektrisch gekoppelt ist. Der elektrische Energiespeicher 3 stellt somit eine Versorgung mit elektrischer Energie für die Aktoreinheit 2 und die Überwachungseinrichtung 4 bereit. Der RFID-Transponder 5 ist insbesondere ein passiver oder semi-passiver Transponder, welcher durch ein magnetisches oder elektromagnetisches Strahlungsfeld eines RFID-Lesegerätes 20 energetisiert wird. Daher muss der RFID-Transponder 5 nicht mit dem elektrischen Energiespeicher 3 gekoppelt sein und bezieht auch keine elektrische Energie aus selbigem. Im Falle eines semi-passiven RFID-Transponders 5 kann der RFID-Transponder 5 eine zusätzliche (nicht explizit dargestellte) kleinere Batterie aufweisen, die lediglich Komponenten des RFID-Transponders 5 zusätzlich zu der Energetisierung aus dem magnetischen oder elektromagnetischen Strahlungsfeld eines RFID-Lesegerätes 20 mit elektrischer Energie versorgt. Durch diese zusätzliche kleinere Batterie kann die RFID-Übertragungsreichweite des RFID-Transponders 5 gegenüber einem rein passiven RFID-Transponder 5 erhöht werden.

Ferner können (nicht explizit dargestellte) weitere elektrische Komponenten wie etwa Spannungswandler, Ein-/Ausschalter oder Sicherungen zwischen den elektrischen Energiespeicher 3 und die jeweils mit Energie versorgten Komponenten 3 und 4 geschaltet sein, je nach Spannungs- und Strombedarf der Komponenten. Beispielsweise kann in eine Wand des Gehäuses 7 eine optische Anzeigevorrichtung 6, wie etwa eine farbige LED, eingelassen sein, die mit dem elektrischen Energiespeicher 3 gekoppelt ist und über die nach außen hin Informationen über den Ladungszustand des elektrischen Energiespeichers 3 angezeigt werden können. Zum Beispiel kann die LED 6 bei Unterschreitung eines bestimmten Ladungsniveaus des elektrischen Energiespeichers 3 periodisch blinken.

In anderen Varianten kann es möglich sein, dass die Kleinsäugerabwehrvorrichtung 10 von extern mit elektrischer Energie versorgt wird. Dazu kann die Kleinsäugerabwehrvorrichtung 10 eine geeignete (nicht explizit dargestellte) Energieversorgungsschnittstelle aufweisen, über die per induktiver Energieübertragung oder über kabelgebundene Stromeinspeisung die elektrischen Komponenten der Kleinsäugerabwehrvorrichtung 10 mit Strom zu deren Betrieb versorgt werden können.

Die Aktoreinheit 2 ist generell dazu ausgelegt, einen Abwehreffekt zur Vertreibung eines Kleinsäugers zu erzeugen. Dieser Abwehreffekt kann auf verschiedenen Wirkprinzipien basieren wie etwa Abgabe von Elektroschocks, Abgabe von akustischen Signalen und/oder Abgabe von visuellen Signalen. Beispielsweise kann die Aktoreinheit 2 eine, zwei oder mehrere Elektroden aufweisen. Die Aktoreinheit 2 kann darüber hinaus einen Hochspannungsgenerator aufweisen, welcher dazu ausgelegt ist, eine der Elektroden mit einem Hochspannungspotential zu beaufschlagen. Beispielsweise kann der Hochspannungsgenerator im Falle von mindestens zwei Elektroden eine Hochspannung zwischen den mindestens zwei Elektroden anlegen.

Alternativ oder zusätzlich dazu kann die Aktoreinheit 2 einen Ultraschallgenerator aufweisen, welcher dazu ausgelegt ist, Schallsignale bei Frequenzen, die oberhalb des Hörbereiches des menschlichen Gehörs liegen, zu erzeugen. Diese Schallsignale sollen zur Abschreckung und Vergrämung der Kleinsäuger dienen.

Schließlich kann die Aktoreinheit 2 alternativ oder zusätzlich dazu mindestens einen Lichtsignalgeber aufweisen, welcher dazu ausgelegt ist, in periodischen oder unregelmäßigen Abständen Lichtblitze abzustrahlen. Diese Lichtblitze können insbesondere in dunklen Umgebungen, d.h. innerhalb eines geschlossenen Motorraums und/oder bei Nacht, dazu geeignet sein, Kleinsäuger wie Marder zu irritieren, zu blenden und letztlich zu verjagen.

Die Kleinsäugerabwehrvorrichtung 10 kann in manchen Varianten dazu ausgelegt sein, autark betrieben zu werden, das heißt, zur Aufrechterhaltung eines geeigneten Abwehrbetriebs der Aktoreinheit 2 ist kein Zutun von außen notwendig, sobald die Vorrichtung einmal aktiviert worden ist und ausreichend elektrische Energie in dem elektrischen Energiespeicher 3 vorhanden ist. In anderen Varianten kann die Kleinsäugerabwehrvorrichtung 10 mit elektrischer Energie von extern versorgt werden.

Zur Gewährleistung der Aufrechterhaltung des Abwehrbetriebs und zur Überwachung der Funktionstüchtigkeit der Kleinsäugerabwehrvorrichtung 10 ist die Überwachungseinrichtung 4 dazu ausgelegt, elektrische Betriebsparameter elektrischer Komponenten der Kleinsäugerabwehrvorrichtung 10 zu überwachen. Solche elektrischen Betriebsparameter können beispielsweise der Stromfluss durch die Aktoreinheit 2 oder der Spannungspegel und/oder der Spannungspegelverlauf in bestimmten Betriebsmodi der Kleinsäugerabwehrvorrichtung 10 sein. Insbesondere kann es für die Überwachungseinrichtung 4 möglich sein, als einen der elektrischen Betriebsparameter den Ladungszustand des elektrischen Energiespeichers 3 zu überwachen.

Dazu kann die Überwachungseinrichtung 4 geeignete elektrische Schaltungen aufweisen, wie beispielsweise ein Spannungsmessgerät mit Messelektronik, Vorwiderstand und/oder Spannungsteiler. Weiterhin kann die Überwachungseinrichtung 4 geeignete Schaltlogikbausteine aufweisen, die in der Lage sind, die gemessenen elektrischen Parameter auszuwerten und in ein Messsignal umzusetzen. Dabei kann die Überwachungseinrichtung 4 beispielsweise einen Mikroprozessor, einen FPGA, einen ASIC oder andere geeignete digitale oder analoge Schaltkreise aufweisen.

Die Überwachungseinrichtung 4 leitet Messsignale, Betriebszustandssignale und/oder entsprechend aufbereitete Ladungszustandssignale an den RFID-Transponder 5 weiter. Der RFID-Transponder 5 kann beispielsweise neben einer RFID-Antenne und einem integrierten Schaltkreis einen Speicherchip aufweisen, in dem die jeweiligen Messsignale, Betriebszustandssignale und/oder aufbereitete Ladungszustandssignale der Überwachungseinrichtung 4 als Statussignale gespeichert werden können. Je nach Speichergröße kann es möglich sein, nur den jeweils aktuellen Wert oder auch mehrere Werte der erfassten und gegebenenfalls aufbereiteten Statussignale in zeitlicher Abfolge auf dem Speicherchip des RFID-Transponders 5 zu speichern. Bei einem Auslesen des passiven oder semi-passiven RFID-Transponders 5 wird einer oder mehrere der in dem Speicherchip momentan abgelegten Werte der Statussignale ausgelesen und als ein den durch die Überwachungseinrichtung 4 überwachten Betriebszustand der Kleinsäugerabwehrvorrichtung 10 repräsentierendes Betriebszustandssignal über eine Luftschnittstelle D mittels eines gemäß RFID vorgesehenen Datenaustauschprotokoll an ein RFID-Abfragegerät 11 eines RFID-Lesegerätes 20 ausgesendet. Insbesondere kann es möglich sein, ein den erfassten Ladungszustand des elektrischen Energiespeichers 3 repräsentierendes Energiespeicherzustandssignal E über die Luftschnittstelle D an das RFID-Abfragegerät 11 des RFID-Lesegerätes 20 auszusenden.

Das Übermitteln von Statussignalen der Komponenten der Kleinsäugerabwehrvorrichtung 10 über RFID bietet den Vorteil, dass für einen Auslesevorgang kein direkter Zugang bzw. keine direkte Sicht auf die Kleinsäugerabwehrvorrichtung 10 notwendig ist. Deshalb kann bei einer Montage der Kleinsäugerabwehrvorrichtung 10 beispielsweise im Motorraum eines Kraftfahrzeugs eine Überwachung des Betriebszustandes der Kleinsäugerabwehrvorrichtung 10 erfolgen, ohne dass die Motorhaube geöffnet werden muss.

Wie in Fig. 1 dargestellt, kann der RFID-Transponder 5 als separates Modul in der Kleinsäugerabwehrvorrichtung 10 integriert werden. Beispielsweise kann ein passiver RFID-Transponder 5 ein aufklebbares Etikett sein, welches in das Gehäuse 7, insbesondere zum Beispiel in ein Batteriefach des elektrischen Energiespeichers 3 eingeklebt werden kann. Durch eine Integration des RFID-Transponders 5 in das Gehäuse 7 ist der RFID-Transponder 5 gegenüber Umwelteinflüssen wie etwa Feuchtigkeit, Schmutz oder anderen potentiell die Funktionsfähigkeit beeinträchtigenden Einflüssen geschützt.

Wie in Fig. 3 dargestellt, kann der RFID-Transponder 5 zusammen mit der Überwachungseinrichtung 4 in ein gemeinsames Transpondermodul integriert werden. Dabei kann die Überwachungseinrichtung 4 ebenfalls im Zuge der externen Energetisierung des RFID-Transponders 5 aktiviert werden. Immer dann, wenn ein RFID-Abfragegerät 11 eines RFID-Lesegerätes 20 den Speicherchip des RFID-Transponders 5 auslesen möchte, kann die Überwachungseinrichtung 4 Statussignale - insbesondere den Ladungszustand des elektrischen Energiespeichers 3 - in Echtzeit und bedarfsgerecht erfassen, so dass der RFID-Transponder 5 dem RFID-Abfragegerät 11 eines RFID-Lesegerätes 20 stets den aktuellsten Betriebszustand übermitteln kann.

Es kann auch möglich sein, die Überwachungseinrichtung 4 gemeinsam mit einem Prozessor 1 der Kleinsäugerabwehrvorrichtung 10 in einem elektronischen Schaltbaustein nebeneinander zu implementieren, wie beispielsweise in Fig. 2 exemplarisch veranschaulicht. Die Überwachungseinrichtung 4 kann dann an eine Datenschnittstelle des Prozessors 1 angeschlossen sein, und die Erfassung des Betriebszustands über durch den Prozessor 1 erfasste elektrische Parameter des elektrischen Energiespeichers 3 und/oder anderer elektrisch betriebener Komponenten wie etwa der Aktoreinheit 2 vornehmen. Beispielsweise kann der Prozessor 1 Fehler oder Defekte im elektrischen Energiespeicher 3 oder in anderen elektrisch betriebenen Komponenten erkennen, wie beispielsweise einen zu hohen Spannungsabfall, eine zu schnelle Entladung oder einen Kurzschluss. Entsprechend kann die Überwachungseinrichtung 4 hin auch derartige außergewöhnliche Betriebszustände über den RFID-Transponder 5 an ein RFID-Abfragegerät 11 eines RFID-Lesegerätes kommunizieren.

Das RFID-Lesegerät 20 kann beispielsweise ein Smartphone, ein Tablet, ein Laptop, ein Notebook oder eine Smartwatch. Dazu kann das RFID-Lesegerät 20 einen eigenen elektrischen Energiespeicher 12 aufweisen, welcher das RFID-Abfragegerät 11 sowie weitere elektronische Komponenten 13 wie etwa einen Lesegerätprozessor, Eingabe-/Ausgabeschnittstellen oder Displays mit elektrischer Energie zu versorgen. Die über das RFID-Abfragegerät 11 von einem RFID-Transponder 5 abgerufenen Betriebszustandssignale und/oder Energiespeicherzustandssignale E können an die weiteren elektronischen Komponenten 13 für eine Bewertung durch einen Nutzer sowie gegebenenfalls für eine Weitergabe an dritte externe Geräte, wie etwa über eine Funkverbindung F, weitergegeben werden. Beispielsweise kann es eine anwendungsspezifische Softwareapplikation ("App") für ein konventionelles Smartphone einem Nutzer ermöglichen, eine Kleinsäugerabwehrvorrichtung 10 über sein persönliches, als RFID-Lesegerät 20 fungierendes mobiles Endgerät hinsichtlich eines möglicherweise erforderlichen Batteriewechsels zu überwachen.

Fig. 4 zeigt ein abstrahiertes Flussdiagramm eines Verfahrens M zur Fernüberwachung von in Kraftfahrzeugen eingebauten Kleinsäugerabwehrvorrichtungen über eine RFID-Schnittstelle. Das Verfahren M kann insbesondere zur Fernüberwachung einer Kleinsäugerabwehrvorrichtung 10, wie im Zusammenhang mit Fig. 1, 2 und 3 erläutert, eingesetzt werden.

In einem ersten Schritt M1 werden elektrische Betriebsparameter, wie beispielsweise der Ladungszustand eines elektrischen Energiespeichers 3 einer Kleinsäugerabwehrvorrichtung 10, mittels einer Überwachungseinrichtung 4 der Kleinsäugerabwehrvorrichtung 10 erfasst. In einem zweiten Schritt M2 werden die durch die Überwachungseinrichtung 4 erfassten elektrischen Betriebsparameter in einem Speicher eines in der Kleinsäugerabwehrvorrichtung 10 integrierten passiven oder semi-passiven RFID-Transponders 5 zwischengespeichert. In einem dritten Schritt M3 erfolgt ein Energetisieren des passiven oder semi-passiven RFID-Transponders 5 durch ein externes RFID-Lesegerät 20 über eine RFID-Luftschnittstelle D, so dass in einem vierten Schritt M4 ein RFID-Abfragegerät 11 des RFID-Lesegerätes 20 die erfassten elektrischen Betriebsparameter, wie beispielsweise der Ladungszustand des elektrischen Energiespeichers 3, aus dem Speicher des passiven oder semi-passiven RFID-Transponders 5 über die RFID-Luftschnittstelle D in das RFID-Lesegerät 20 ausgelesen werden kann.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Kleinsäugerabwehrvorrichtung (10), umfassend:
einer Aktoreinheit (2), welche dazu ausgelegt ist, einen Abwehreffekt zur Vertreibung eines Kleinsäugers zu erzeugen;
einer Überwachungseinrichtung (4), welche mit elektrischen Komponenten der Kleinsäugerabwehrvorrichtung (10) gekoppelt ist, und welche dazu ausgelegt ist, den Betriebszustand der Kleinsäugerabwehrvorrichtung (10) zu überwachen; **gekennzeichnet durch**
einen passiven oder semi-passiven RFID-Transponder (5), welcher mit der Überwachungseinrichtung (4) gekoppelt ist, und welcher dazu ausgelegt ist,
ein den Betriebszustand der Kleinsäugerabwehrvorrichtung (10) repräsentierendes Betriebszustandssignal über eine RFID-Luftschnittstelle an ein RFID-Lesegerät (20) auszusenden.

2. Kleinsäugerabwehrvorrichtung (10) gemäß Anspruch 1, weiterhin mit:
einem elektrischen Energiespeicher (3), welcher mit der Aktoreinheit (2) gekoppelt ist, und welcher dazu ausgelegt ist, die Aktoreinheit (2) zu deren Betrieb mit elektrischer Energie zu versorgen.

3. Kleinsäugerabwehrvorrichtung (10) gemäß Anspruch 2, wobei die Überwachungseinrichtung (4) mit dem elektrischen Energiespeicher (3) gekoppelt und dazu ausgelegt ist, den Ladungszustand des elektrischen Energiespeichers (3) zu überwachen.

4. Kleinsäugerabwehrvorrichtung gemäß Anspruch 3, wobei der passive oder semi-passive RFID-Transponder (5) dazu ausgelegt ist, ein den durch die Überwachungseinrichtung (4) überwachten Ladungszustand des elektrischen Energiespeichers (3) repräsentierendes Energiespeicherzustandssignal (E) über die RFID-Luftschnittstelle an das RFID-Lesegerät (20) auszusenden.

5. Kleinsäugerabwehrvorrichtung (10) gemäß einem der Ansprüche 2 bis 4, wobei der elektrische Energiespeicher (3) eine Batterie oder einen Akkumulator aufweist.

6. Kleinsäugerabwehrvorrichtung (10) gemäß einem der Ansprüche 2 bis 5, weiterhin mit:
einem Gehäuse (7), in dem zumindest der elektrische Energiespeicher (3), die Überwachungseinrichtung (4) und der RFID-Transponder (5) eingebaut sind.

7. Kleinsäugerabwehrvorrichtung (10) gemäß einem der Ansprüche 2 bis 6, wobei der passive oder semi-passive RFID-Transponder (5) einen Speicherchip, einen integrierten Schaltkreis und eine RFID-Antenne aufweist und wobei der Speicherchip dazu ausgelegt ist, das jeweils aktuellste Energiespeicherzustandssignal (E) zwischenzuspeichern.

8. Kleinsäugerabwehrvorrichtung (10) gemäß Anspruch 7, wobei die Überwachungseinrichtung (4) in einen Mikroprozessor (1) der Kleinsäugerabwehrvorrichtung (10) integriert ist und dazu ausgelegt ist, in periodischen Abständen den Ladungszustand des elektrischen Energiespeichers (3) zu erfassen und das in dem Speicherchip des passiven oder semi-passiven RFID-Transponders (5) gespeicherte Energiespeicherzustandssignal (E) zu aktualisieren.

9. Kleinsäugerabwehrvorrichtung (10) gemäß Anspruch 7, wobei die Überwachungseinrichtung (4) in den passiven oder semi-passiven RFID-Transponder (5) integriert ist und dazu ausgelegt ist, den Ladungszustand des elektrischen Energiespeichers (3) zu erfassen, sobald der integrierte Schaltkreis des passiven oder semi-passiven RFID-Transponders (5) durch das magnetische oder elektromagnetische Feld ein RFID-Lesegerätes (20) energetisiert wird.

10. Kleinsäugerabwehrvorrichtung (10) gemäß einem der Ansprüche 1 bis 9, wobei die Aktoreinheit (2) aufweist:
mindestens eine Elektrode; und
einen Hochspannungsgenerator, welcher dazu ausgelegt ist, die mindestens eine Elektrode mit einem Hochspannungspotential zu beaufschlagen.

11. Kleinsäugerabwehrvorrichtung (10) gemäß Anspruch 10, wobei die Aktoreinheit (2) mindestens zwei Elektroden aufweist, und wobei der Hochspannungsgenerator dazu ausgelegt ist, eine Hochspannung zwischen den mindestens zwei Elektroden anzulegen.

12. Kleinsäugerabwehrvorrichtung (10) gemäß einem der Ansprüche 1 bis 11 wobei die Aktoreinheit (2) einen Ultraschallgenerator aufweist, welcher dazu ausgelegt ist, Schallsignale bei Frequenzen, die oberhalb des Hörbereiches des menschlichen Gehörs liegen, zu erzeugen.

13. Kleinsäugerabwehrvorrichtung (10) gemäß einem der Ansprüche 1 bis 12 wobei die Aktoreinheit (2) mindestens einen Lichtsignalgeber aufweist, welcher dazu ausgelegt ist, in periodischen oder unregelmäßigen Abständen Lichtblitze abzustrahlen.

14. System, mit:
mindestens einer Kleinsäugerabwehrvorrichtung (10) gemäß einem der Ansprüche 1 bis 13; und
einem Lesegerät (20), welches ein RFID-Abfragegerät (11) aufweist.

15. System gemäß Anspruch 14, wobei das Lesegerät (20) ein tragbares Gerät mit drahtloser Netzwerkkonnektivität, insbesondere ein Smartphone, ein Tablet, ein Laptop, ein Notebook oder eine Smartwatch ist.

16. Kraftfahrzeug mit einer Kleinsäugerabwehrvorrichtung (10) gemäß einem der Ansprüche 1 bis 13, welche im Motorraum des Kraftfahrzeugs angeordnet ist.

17. Verfahren (M) zur Fernüberwachung einer Kleinsäugerabwehrvorrichtung (10), umfassend:
Erfassen (M1) elektrischer Betriebsparameter einer
Kleinsäugerabwehrvorrichtung (10) mittels einer Überwachungseinrichtung (4) der Kleinsäugerabwehrvorrichtung (10); **gekennzeichnet durch** Zwischenspeichern (M2) der durch die Überwachungseinrichtung (4) erfassten elektrischen Betriebsparameter in einem Speicher eines in der Kleinsäugerabwehrvorrichtung (10) integrierten passiven oder semi-passiven RFID-Transponders (5);
Energetisieren (M3) des passiven oder semi-passiven RFID-Transponders (5) durch ein externes RFID-Lesegerät (20) über eine RFID-Luftschnittstelle (D); und
Auslesen (M4), durch ein RFID-Abfragegerät (11) des RFID-Lesegerätes (20), der erfassten elektrischen Betriebsparameter aus dem Speicher des passiven oder semi-passiven RFID-Transponders (5) über die RFID-Luftschnittstelle (D) in das RFID-Lesegerät (20).

## Claims

1. Small mammal defence device (10), comprising:
an actuator unit (2) configured to generate a repellent effect to drive away a small mammal;
a monitoring device (4), coupled to electrical components of the small mammal defence device (10) and configured to monitor the operating state of the small mammal defence device (10); **characterised by**
a passive or semi-passive RFID transponder (5) coupled to the monitoring device (4) and configured to send an operating state signal representing the operating state of the small mammal defence device (10) to an RFID reader (20) via an RFID air interface.

2. Small mammal defence device (10) according to claim 1, further comprising:
an electrical energy storage device (3), coupled to the actuator unit (2) and configured to supply the actuator unit (2) with electrical energy for operating it.

3. Small mammal defence device (10) according to claim 2, wherein the monitoring device (4) is coupled to the electrical energy storage device (3) and configured to monitor the charge state of the electrical energy storage device (3).

4. Small mammal defence device according to claim 3, wherein the passive or semi-passive RFID transponder (5) is configured to send an energy storage state signal (E), representing the charge state of the electrical energy storage device (3) as monitored by the monitoring device (4), to the RFID reader (20) via the RFID air interface.

5. Small mammal defence device (10) according to any of claims 2 to 4, wherein the electrical energy storage device (3) comprises a battery or an accumulator.

6. Small mammal defence device (10) according to any of claims 2 to 5, further comprising:
a housing (7) in which at least the electrical energy storage device (3), the monitoring device (4) and the RFID transponder (5) are installed.

7. Small mammal defence device (10) according to any of claims 2 to 6, wherein the passive or semi-passive RFID transponder (5) has a memory chip, an integrated circuit and an RFID antenna, and wherein the memory chip is configured to buffer the most current energy storage state signal (E).

8. Small mammal defence device (10) according to claim 7, wherein the monitoring device (4) is integrated into a microprocessor (1) of the small mammal defence device (10) and configured to detect the charge state of the electrical energy storage device (3) at periodic intervals and to update the energy storage state signal (E) stored in the memory chip of the passive or semi-passive RFID transponder (5).

9. Small mammal defence device (10) according to claim 7, wherein the monitoring device (4) is integrated into the passive or semi-passive RFID transponder (5) and configured to detect the charge state of the electrical energy storage device (3) as soon as the integrated circuit of the passive or semi-passive RFID transponder (5) is energised by the magnetic or electromagnetic field of an RFID reader (20).

10. Small mammal defence device (10) according to any of claims 1 to 9, wherein the actuator unit (2) has:
at least one electrode; and
a high-voltage generator configured to apply a high-voltage potential to the at least one electrode.

11. Small mammal defence device (10) according to claim 10, wherein the actuator unit (2) has at least two electrodes, and wherein the high-voltage generator is configured to apply a high voltage between the at least two electrodes.

12. Small mammal defence device (10) according to any of claims 1 to 11, wherein the actuator unit (2) has an ultrasound generator configured to generate sound signals at frequencies above the audible range of the human ear.

13. Small mammal defence device (10) according to any of claims 1 to 12, wherein the actuator unit (2) has at least one light signal generator configured to emit flashes of light at periodic or irregular intervals.

14. System comprising:
at least one small mammal defence device (10) according to any of claims 1 to 13; and
a reader (20) having an RFID interrogator (11).

15. System according to claim 14, wherein the reader (20) is a portable device having wireless network connectivity, in particular a smartphone, a tablet, a laptop, a notebook or a smartwatch.

16. Motor vehicle with a small mammal defence device (10) according to any of claims 1 to 13, which is arranged in the engine compartment of the motor vehicle.

17. Method (M) for remotely monitoring a small mammal defence device (10), comprising:
detecting (M1) electrical operating parameters of a small mammal defence device (10) using a monitoring device (4) of the small mammal defence device (10); **characterised by** buffering (M2) the electrical operating parameters detected by the monitoring device (4) in a storage device of a passive or semi-passive RFID transponder (5) integrated into the small mammal defence device (10);
energising (M3) the passive or semi-passive RFID transponder (5) via an RFID air interface (D) using an external RFID reader (20); and
reading (M4) the detected electrical operating parameters from the storage device of the passive or semi-passive RFID transponder (5) into the RFID reader (20) via the RFID air interface (D), by means of an RFID interrogator (11) of the RFID reader (20).

## Revendications

1. Dispositif de défense contre les petits mammifères (10), comprenant :
une unité d'actionnement (2) qui est conçue pour produire un effet de défense afin de chasser un petit mammifère ;
un moyen de surveillance (4) qui est couplé à des composants électriques du dispositif de défense contre les petits mammifères (10) et qui est conçu pour surveiller l'état de fonctionnement du dispositif de défense contre les petits mammifères (10) ; **caractérisé par**
un transpondeur RFID passif ou semi-passif (5) qui est couplé au moyen de surveillance (4) et qui est conçu pour envoyer un signal d'état de fonctionnement représentant l'état de fonctionnement du dispositif de défense contre les petits mammifères (10) à un lecteur RFID (20) via une interface radio RFID.

2. Dispositif de défense contre les petits mammifères (10) selon la revendication 1, comprenant en outre :
un dispositif de stockage d'énergie électrique (3) qui est couplé à l'unité d'actionnement (2) et qui est conçu pour alimenter l'unité d'actionnement (2) en énergie électrique pour son fonctionnement.

3. Dispositif de défense contre les petits mammifères (10) selon la revendication 2, dans lequel le moyen de surveillance (4) est couplé au dispositif de stockage d'énergie électrique (3) et conçu pour surveiller l'état de charge du dispositif de stockage d'énergie électrique (3).

4. Dispositif de défense contre les petits mammifères selon la revendication 3, dans lequel le transpondeur RFID passif ou semi-passif (5) est conçu pour envoyer un signal d'état de dispositif de stockage d'énergie (E) représentant l'état de charge du dispositif de stockage d'énergie électrique (3) surveillé par le moyen de surveillance (4) au lecteur RFID (20) via l'interface radio RFID.

5. Dispositif de défense contre les petits mammifères (10) selon l'une des revendications 2 à 4, dans lequel le dispositif de stockage d'énergie électrique (3) présente une batterie ou un dispositif de stockage.

6. Dispositif de défense contre les petits mammifères (10) selon l'une des revendications 2 à 5, comprenant en outre :
un boîtier (7) dans lequel sont intégrés au moins le dispositif de stockage d'énergie électrique (3), le moyen de surveillance (4) et le transpondeur RFID (5).

7. Dispositif de défense contre les petits mammifères (10) selon l'une des revendications 2 à 6, dans lequel le transpondeur RFID passif ou semi-passif (5) présente une puce mémoire, un circuit intégré et une antenne RFID, et dans lequel la puce mémoire est conçue pour stocker temporairement le signal d'état de dispositif de stockage d'énergie (E) le plus récent.

8. Dispositif de défense contre les petits mammifères (10) selon la revendication 7, dans lequel le moyen de surveillance (4) est intégré dans un microprocesseur (1) du dispositif de défense contre les petits mammifères (10) et est conçu pour détecter à intervalles périodiques l'état de charge du dispositif de stockage d'énergie électrique (3) et actualiser le signal d'état de dispositif de stockage d'énergie (E) enregistré dans la puce mémoire du transpondeur RFID passif ou semi-passif (5).

9. Dispositif de défense contre les petits mammifères (10) selon la revendication 7, dans lequel le moyen de surveillance (4) est intégré dans le transpondeur RFID passif ou semi-passif (5) et est conçu pour détecter l'état de charge du dispositif de stockage d'énergie électrique (3) dès que le circuit intégré du transpondeur RFID passif ou semi-passif (5) est alimenté par le champ magnétique ou électromagnétique d'un lecteur RFID (20).

10. Dispositif de défense contre les petits mammifères (10) selon l'une des revendications 1 à 9, dans lequel l'unité d'actionnement (2) présente :
au moins une électrode ; et
un générateur de haute tension qui est conçu pour soumettre ladite au moins une électrode à un potentiel de haute tension.

11. Dispositif de défense contre les petits mammifères (10) selon la revendication 10, dans lequel l'unité d'actionnement (2) présente au moins deux électrodes et dans lequel le générateur de haute tension est conçu pour appliquer une haute tension entre lesdites au moins deux électrodes.

12. Dispositif de défense contre les petits mammifères (10) selon l'une des revendications 1 à 11, dans lequel l'unité d'actionnement (2) présente un générateur d'ultrasons qui est conçu pour générer des signaux sonores à des fréquences supérieures à la gamme audible par l'oreille humaine.

13. Dispositif de défense contre les petits mammifères (10) selon l'une des revendications 1 à 12, dans lequel l'unité d'actionnement (2) présente au moins un générateur de signaux lumineux qui est conçu pour émettre des éclairs lumineux à intervalles périodiques ou irréguliers.

14. Système comprenant :
au moins un dispositif de défense contre les petits mammifères (10) selon l'une des revendications 1 à 13 ; et
un lecteur (20) qui présente un interrogateur RFID (11).

15. Système selon la revendication 14, dans lequel le lecteur (20) est un appareil portable avec une connectivité réseau sans fil, en particulier un smartphone, une tablette, un ordinateur portable, un notebook ou une montre connectée.

16. Véhicule automobile équipé d'un dispositif de défense contre les petits mammifères (10) selon l'une des revendications 1 à 13, qui est disposé dans le compartiment moteur du véhicule automobile.

17. Procédé (M) de surveillance à distance d'un dispositif de défense contre les petits mammifères (10), comprenant de :
détecter (M1) des paramètres de fonctionnement électriques d'un dispositif de défense contre les petits mammifères (10) à l'aide d'un moyen de surveillance (4) du dispositif de défense contre les petits mammifères (10) ; **caractérisé par** le fait de :
stocker temporairement (M2) les paramètres de fonctionnement électriques détectés par le moyen de surveillance (4) dans une mémoire d'un transpondeur RFID passif ou semi-passif (5) intégré dans le dispositif de défense contre les petits mammifères (10) ;
alimenter (M3) le transpondeur RFID passif ou semi-passif (5) par un lecteur RFID externe (20) via une interface radio RFID (D) ; et
lire (M4), par un interrogateur RFID (11) du lecteur RFID (20), les paramètres de fonctionnement électriques détectés dans la mémoire du transpondeur RFID passif ou semi-passif (5) via l'interface radio RFID (D) dans le lecteur RFID (20).
